(19) Europäisches Patentamt
European Patent Office
Office européen des brevets

(11) Veröffentlichungsnummer: **0 075 864**
**B1**

(12) # EUROPÄISCHE PATENTSCHRIFT

(45) Veröffentlichungstag der Patentschrift: **08.01.86**

(51) Int. Cl.⁴: **C 07 F 7/14**, C 07 F 7/18, C 07 F 7/12

(21) Anmeldenummer: **82108796.2**

(22) Anmeldetag: **23.09.82**

(54) **Verfahren zur Herstellung von Tetrafluorethyloxy-alkylsilanen.**

(30) Priorität: **25.09.81 DE 3138236**

(43) Veröffentlichungstag der Anmeldung: **06.04.83 Patentblatt 83/14**

(45) Bekanntmachung des Hinweises auf die Patenterteilung: **08.01.86 Patentblatt 86/2**

(84) Benannte Vertragsstaaten: **DE FR GB IT**

(56) Entgegenhaltungen:
**DE - A - 2 851 456**
**GB - A - 996 067**

(73) Patentinhaber: **WACKER-CHEMIE GMBH, Prinzregentenstrasse 22, D-8000 München 22 (DE)**

(72) Erfinder: **Lindner, Tassilo, Dr. Dipl.-Chem., Neuhauserstrasse 10, D-8261 Mehring-Öd (DE)**
Erfinder: **Wagner, Wolfgang, Dr. Dipl.-Chem., 1-19-5, Minami-Kugahara, Otaku Tokyo (JP)**
Erfinder: **Zeller, Norbert, Dr. Dipl.-Chem., Schweitzerstrasse 5, D-8263 Burghausen (DE)**
Erfinder: **Riedle, Rudolf, Dr. Dipl.-Chem., Lindenweg 29, D-8263 Burghausen (DE)**

**EP 0 075 864 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von Tetrafluorethyloxyalkylsilanen in flüssiger Phase durch Additionsreaktion von Si-H-Bindung aufweisendem Silan mit aliphatischer Mehrfachbindung aufweisender Tetrafluorethyloxy-Verbindung.

Aus Proc. Acad. Sci. USSR, Chem. Sect. 124, 838, 1959, ist es bekannt, dass beispielsweise Tetrafluorethyloxypropylmethyl-dichlor-silan durch Umsetzen von Methyl-dichlor-silan mit Tetrafluorethyl-allyl-ether in Gegenwart eines Platin-Kohle-Katalysators im Autoklaven bei 11 bar abs. zugänglich ist. Es wird jedoch lediglich eine für industrielle Zwecke völlig unbefriedigende Ausbeute von 35% erzielt.

Weiterhin wird gemäss DE-OS 28 51 456 die Herstellung von Organosiliciumverbindungen durch Additionsreaktion von H-Silanen mit aliphatischer Mehrfachbindung aufweisenden Verbindungen in einem Rohrreaktor gelehrt, wobei im Reaktor eine minimale Umlaufgeschwindigkeit des Reaktionsgemisches von 10 m/Minute eingehalten werden soll.

Aufgabe der Erfindung war es, ein hohe Ausbeuten erzielendes Verfahren zur Herstellung von Tetrafluorethyloxysilanen zu finden. Insbesondere war es Aufgabe der Erfindung, die im speziellen Fall bei den Additionsreaktionen stets beobachteten, auf die chemischen Eigenschaften des Tetrafluorethyloxyrests zurückzuführenden Fluoraustauschreaktionen weitgehend zu vermeiden.

Gegenstand der Erfindung ist ein Verfahren zur Herstellung von Tetrafluorethyloxyalkylsilanen in flüssiger Phase durch Additionsreaktion von Si-H-Bindung aufweisendem Silan mit einer Tetrafluorethyloxy-Verbindung, das dadurch gekennzeichnet ist, dass die Reaktion in einem Rohrreaktor unter Umwälzung des Reaktionsgemisches durchgeführt wird, wobei eine Umlaufgeschwindigkeit von mindestens 10 m/Minute eingehalten wird und dass Si-H-Bindung aufweisendes Silan, bezogen auf die Menge der im Reaktionsgemisch anwesenden Tetrafluorethyloxy-Verbindung im Überschuss eingesetzt wird.

Die erfindungsgemäss einzusetzenden, Si-gebundenen Wasserstoff aufweisenden Silane können durch die allgemeine Formel

$$HSi[R(O)_b]_aX_{3-a}$$

dargestellt werden, wobei

X gleiche oder verschiedene Halogenatome,
a 0, 1, 2 oder 3,
b 0 oder 1 und
R gleiche oder verschiedene einwertige, ggf. substituierte Kohlenwasserstoffreste ohne aliphatische Mehrfachbindung mit 1 bis 18 Kohlenstoffatomen bedeuten.

Beispiele für Kohlenwasserstoffreste R sind Alkylreste, wie der Methyl-, Ethyl-, n-Propyl-, Isopropyl-, n-Butyl-, sec.-Butyl, der 2-Ethylhexyl-rest, sowie Octadecylreste; ferner Cycloalkylreste, wie der Cyclohexylrest und Arylreste, wie der Phenylrest. Beispiele für substituierte Kohlenwasserstoffreste R sind insbesondere halogenierte Kohlenwasserstoffreste, wie der 1-Chlorpropylrest.

X steht vorzugsweise für Chlor.

Spezielle Beispiele für erfindungsgemäss einzusetzende H-Silane sind Trichlorsilan, Methyldichlorsilan, Trimethylsilan, Methylphenylchlorsilan, Dimethylchlorsilan, Trimethoxysilan.

Die im Rahmen des erfindungsgemässen Verfahrens einzusetzenden Tetrafluorethyloxy-Verbindungen werden durch die allgemeine Formel

$$HCF_2CF_2OQ$$

dargestellt, wobei

Q für einen aliphatischen Rest mit 2 bis 6 Kohlenstoffatomen und olefinischer Doppelbindung steht.

Beispiele für Q sind der Vinyl-, der Allyl-, der Crotyl-, der Methallyl-, der n-Pentenyl-, der 2.4.4-Trimethylpentenyl-, der n-Hexenyl-Rest.

Spezielle Beispiele für erfindungsgemäss einzusetzende Tetrafluorethyloxyverbindungen sind Tetrafluorethyl-vinyl-ether und Tetrafluorethyl-allyl-ether.

Die im Rahmen der Erfindung einzusetzenden H-Silane werden, bezogen auf die Menge im Reaktionsgemisch anwesender Tetrafluorethyloxy-Verbindung vorzugsweise im Überschuss von 10 bis 25 Mol-% eingesetzt.

Die Umsetzungen werden in Gegenwart von die Anlagerung von Si-gebundenem Wasserstoff an die aliphatische Doppelbindung förderndem Katalysator durchgeführt. Insbesondere kommen hierfür sogenannte Hydrosilylierungskatalysatoren, die in homogener Phase eingesetzt werden können, in Betracht. Beispiele für derartige Katalysatoren sind Verbindungen bzw. Komplexe des Platins, des Rhodiums, des Palladiums, des Kobalts, des Nickels und des Eisens. Beispiele hierfür sind $H_2PtCl_2 \cdot 6H_2O$, Platin-Olefin-Komplexe, Platin-Alkohol- oder Platin-Alkoholat-Komplexe, Platin-Ether-Komplexe, Platin-Aldehyd-Komplexe, Platin-Keton-Komplexe, wie Umsetzungsprodukte aus $H_2PtCl_6 \cdot 6H_2O$ und Cyclohexanon, Platin-vinylsiloxan-Komplexe, wie Platin-divinyltetramethyldisiloxan-Komplexe, bis-(γ-Piccolin)-Platindichlorid, Trimethylendipyridin-platindichlorid, Umsetzungsprodukte von $PtCl_4$ mit Olefin und primärem und/oder sekundärem Amin, sowie Carbonyle des Eisens, des Nickels und des Kobalts.

Neben den genannten Katalysatoren können dem Reaktionsgemisch ferner Promotoren wie Phenothiazin, Diphenylamin, N,N-Diphenyl-p-phenylendiamin oder Phenoxazin zugesetzt werden.

Die Menge an Katalysator im Reaktionsgemisch beträgt vorzugsweise $10^{-3}$ bis $10^{-7}$ Mol je Grammatom im Reaktionsgemisch anwesenden Si-gebundenen Wasserstoffs.

Das erfindungsgemässe Verfahren wird in einem Rohrreaktor in kontinuierlicher Arbeitsweise

durchgeführt. Die Reaktionsteilnehmer einschliesslich Katalysator und ggf. Promotor können getrennt voneinander oder im Gemisch miteinander in den Rohrreaktor kontinuierlich eingeführt werden. Vorzugsweise werden jedoch Reaktionsteilnehmer und Katalysator getrennt in das Reaktionssystem eingebracht.

Der Rohrreaktor ist zumeist in der Form eines Schleifenreaktors ausgebildet, in dem das Reaktionsgemisch im Kreislauf geführt werden kann. Die Rohrlänge zwischen Zuführungsstelle für die Reaktionsteilnehmer einschliesslich Katalysator und Reaktionsgemischaustritt beträgt zumeist 5 bis 20 m, typischerweise um 10 m. Die lichte Rohrweite liegt bei etwa 5 bis 20 mm.

Es werden vorzugsweise Reaktionstemperaturen von 80 bis 120 °C eingehalten.

Die Druckverhältnisse im Reaktor werden so abgestimmt, dass innerhalb des Reaktors keine gasförmige Phase entsteht. Typischerweise herrschen Betriebsdrucke von 3 bis 6 bar abs.

Das Reaktionsgemisch wird mit einer Geschwindigkeit von mindestens 10 m/Minute im Kreislauf geführt. Zumeist beträgt die Umlaufgeschwindigkeit 30 bis 40 m/Minute, ohne dass für die Umlaufgeschwindigkeit eine obere Grenze bestünde.

Die Verweilzeit des Reaktionsgemisches im Reaktor wird vorteilhafterweise so abgestimmt, dass wenigstens 90 Mol-% der eingesetzten Menge an Tetrafluorethyloxy-Verbindung umgesetzt wurde, bevor das Reaktionsgemisch den Reaktor verlässt. Dabei ergeben sich typischerweise Verweilzeiten im Reaktor von 5 bis 12 Minuten.

Beispiele für erfindungsgemäss herzustellende Verbindungen sind:
Tetrafluorethyloxypropyl-trichlor-silan
Tetrafluorethyloxypropyl-methyl-dichlor-silan
Tetrafluorethyloxypropyl-dimethyl-chlor-silan
Tetrafluorethyloxyethyl-trichlor-silan
Tetrafluorethyloxyethyl-methyl-dichlor-silan
Tetrafluorethyloxyethyl-dimethyl-chlor-silan
Tetrafluorethyloxypropyl-trimethoxy-silan
Tetrafluorethyloxypropyl-triacetoxy-silan

Nach dem erfindungsgemässen Verfahren gelingt es, Tetrafluoroxyalkylsilane in hoher Ausbeute zu gewinnen, ohne dass in nennenswertem Umfang Fluoraustauschreaktionen stattfinden, die sonst bei der Herstellung derartiger Silane beobachtet werden und zu Spezien mit Si-F-Bindung unter Zerstörung bzw. Substitution der Tetrafluorethyleinheit führen.

Die erfindungsgemäss hergestellten Silane sowie davon ableitbare polymere Spezien dienen zum Hydrophobieren und Oleophobieren von textilem Material, Papierprodukten, zur Oberflächenbehandlung von anorganischen oder organischen Feststoffen sowie als Antischaum- oder Schmiermittel.

Die Erfindung wird nun anhand von Beispielen näher erläutert:

Beispiel 1

Herstellung von Tetrafluorethyloxypropyltrichlorsilan

Als Reaktor wird ein, in der eigentlichen Reaktionszone von 10 m Länge gewendeltes Stahlrohr von 9 mm lichter Weite verwendet. Der Rohrreaktor ist u-förmig ausgebildet. Jeweils am Ende der beiden Schenkel sind die Einlass-und Austrittsöffnungen für das Reaktionsgemisch angeordnet. Knapp unterhalb der Ein- und Austrittsöffnungen für das Reaktionsgemisch sind die beiden Schenkel über ein Stahlrohr von 9 mm lichter Weite kurzgeschlossen. In dieser Verbindung befindet sich ferner eine Umwälzpumpe, mit der das Reaktionsgemisch mit einer Geschwindigkeit von 35 m/Minute im Kreislauf geführt wird. Die Reaktionstemperatur beträgt 100 °C. Der Druck im Reaktor beträgt 5 bar und wird über ein Druckhalteventil, das am Reaktionsgemischaustritt angeordnet ist, gesteuert.

Es werden je Stunde 1,5 l (11,3 Mol) Tetrafluorethyl-allylether, 1,3 l (12,7 Mol) Trichlorsilan und 10 ml Katalysatorlösung in den Reaktor eindosiert. Die Katalysatorlösung wurde erhalten durch Lösen von 19,4 g Tetrachlordioctendiplatin (II) in 1000 ml Chloroform

Stündlich werden in kontinuierlicher Arbeitsweise 3,5 kg Reaktionsgemisch abgezogen, das hinsichtlich seines Gehalts an Siliciumverbindungen die folgende Zusammensetzung aufweist:

| | |
|---|---|
| $HSiCl_3$ | 3,6 Gew.-% |
| $SiCl_4$ | 0,7 Gew.-% |
| $HCF_2CF_2OCH_2CH=CH_2$ | 0,6 Gew.-% |
| $CH_3CH_2CH_2SiCl_3$ | 0,5 Gew.-% |
| $HCF_2CF_2O(CH_2)_3SiCl_2F$ | 1,0 Gew.-% |
| $HCF_2CF_2O(CH_2)_3SiCl_3$ | 91,6 Gew.-% |

Das Zielprodukt wird als farblose Flüssigkeit mit einem Siedepunkt von 74,5 °C bei 15 mbar gewonnen.

Brechungsindex $n_D^{25}$ = 1,3970 Dichte bei 25 °C = 1,43 g/ml, Viskosität bei 25 °C 1,9 $mm^2/s$.

Beispiel 2

Herstellung von Tetrafluorethyloxypropylmethyl-dichlorsilan

Es wird der gemäss Beispiel 1 beschriebene Reaktor verwendet. Je Stunde werden 1,5 l (11,3 Mol) Tetrafluorethyl-allyl-ether, 1,4 l (13,5 Mol) Methyldichlorsilan und 15 ml der gemäss Beispiel 1 beschriebenen Katalysatorlösung in den Reaktor eingeführt. Die Reaktionstemperatur beträgt 100 °C, der Betriebsdruck 5 bar abs. Es werden 3,3 kg/Stunde Reaktionsgemisch ausgetragen mit folgender Zusammensetzung:

| | |
|---|---|
| Propen | 0,2 Gew.-% |
| $HSi(CH_3)Cl_2$ | 4,8 Gew.-% |
| $CH_3SiCl_3$ | 6,3 Gew.-% |
| $HCF_2CF_2OCH_2CH=CH_2$ | 1,0 Gew.-% |
| $CH_3CH_2CH_2Si(CH_3)Cl_2$ | 2,3 Gew.-% |
| $HCF_2CF_2O(CH_2)_3Si(CH_3)F_2$ | 0,2 Gew.-% |
| $HCF_2CF_2O(CH_2)_3Si(CH_3)ClF$ | 3,0 Gew.-% |
| $HCF_2CF_2O(CH_2)_3Si(CH_3)Cl_2$ | 78,5 Gew.-% |

Das Zielprodukt wird durch Vakuumdestillation als farblose Flüssigkeit vom Siedepunkt 80 °C bei 10 mbar erhalten.

Brechungsindex $n_D^{25}$ = 1,3930, Dichte bei 25 °C = 1,31 g/ml, Viskosität bei 25 °C 2,3 $mm^2/s$.

Vergleichsbeispiel 1

Herstellung von Tetrafluorethyloxypropyl-methyl-dichlorsilan

In einem Reaktionskolben werden 10 ml Katalysator (analog Beispiel 1) vorgelegt. Unter Rühren wird im Verlauf einer Stunde ein Gemisch aus 395,2 g (2,5 Mol) Tetrafluorethylallyl-ether und 316,3 g (2,75 Mol) Methyldichlorsilan zugetropft. Die Reaktionstemperatur beträgt 100 °C. Es werden 704,7 g Reaktionsgemisch der folgenden Zusammensetzung erhalten:

| | |
|---|---|
| Propen | 0,5 Gew.-% |
| $HSi(CH_3)Cl_2$ | 10,1 Gew.-% |
| $CH_3SiCl_3$ | 14,5 Gew.-% |
| $HCF_2CF_2OCH_2CH{=}CH_2$ | 12,8 Gew.-% |
| $CH_3CH_2CH_2Si(CH_3)Cl_2$ | 3,1 Gew.-% |
| $HCF_2CF_2O(CH_2)_3Si(CH_3)F_2$ | 1,5 Gew.-% |
| $HCF_2CF_2O(CH_2)_3Si(CH_3)ClF$ | 7,0 Gew.-% |
| $HCF_2CF_2O(CH_2)_3Si(CH_3)Cl_2$ | 46,8 Gew.-% |

Vergleichsbeispiel 2

Es wird die gemäss Beispiel 2 beschriebene Arbeitsweise wiederholt, mit der Abänderung, dass äquimolare Mengen eingesetzt werden, d.h. 11,3 Mol Tetrafluorethyl-allyl-ether und 1,18 l (11,3 Mol) Methyldichlorsilan.

Es werden pro Stunde 3,0 kg Reaktionsgemisch der folgenden Zusammensetzung erhalten:

| | |
|---|---|
| Propen | 0,9 Gew.-% |
| $HSi(CH_3)Cl_2$ | 3,8 Gew.-% |
| $CH_3SiCl_3$ | 4,9 Gew.-% |
| $HCF_2CF_2OCH_2CH{=}CH_2$ | 9,8 Gew.-% |
| $CH_3CH_2CH_2Si(CH_3)Cl_2$ | 5,7 Gew.-% |
| $HCF_2CF_2O(CH_2)_3Si(CH_3)F_2$ | 1,4 Gew.-% |
| $HCF_2CF_2O(CH_2)_3Si(CH_3)ClF$ | 6,2 Gew.-% |
| $HCF_2CF_2O(CH_2)_3Si(CH_3)Cl_2$ | 62,5 Gew.-% |

Der Vergleich der Ergebnisse gemäss den Vergleichsbeispielen 1 und 2 mit den Ergebnissen gemäss den Beispielen 1 und 2 zeigt, dass ohne das erfindungsgemässe Arbeiten im Rohrreaktor bzw. ohne das erfindungsgemässe Einsetzen eines Silanüberschusses starke Ausbeuteminderungen zu verzeichnen sind.

## Patentansprüche

1. Verfahren zur Herstellung von Tetrafluorethyloxyalkylsilanen in flüssiger Phase durch Addition von Si-H-Bindung aufweisendem Silan mit einer Tetrafluorethyloxy-Verbindung der Formel $HCF_2–CF_2–O–Q$, worin Q für einen aliphatischen Rest mit 2 bis 6 Kohlenstoffatomen und olefinischer Doppelbindung steht, in Gegenwart eines Anlagerungskatalysators, dadurch gekennzeichnet, dass die Reaktion in einem Rohrreaktor unter Umwälzung des Reaktionsgemisches durchgeführt wird, wobei eine Umlaufgeschwindigkeit von mindestens 10 m/Minute eingehalten wird und dass Si-H-Bindung aufweisendes Silan, bezogen auf die Menge im Reaktionsgemisch anwesender Tetrafluorethyloxy-Verbindung, im Überschuss eingesetzt wird.

2. Verfahren nach Anspruch 1, dadurch gekennzeichnet, dass der Silanüberschuss 10 bis 25 Mol-%, bezogen auf die Menge im Reaktionsgemisch anwesender Tetrafluorethyloxy-Verbindung, beträgt.

## Revendications

1. Procédé pour la préparation de tétrafluoroéthyloxyalkyl-silanes, en phase liquide, par fixation d'un silane à liaison Si-H sur un composé présentant un groupement tétrafluoroéthyloxy et, répondant à la formule $HCF_2–CF_2–O–Q$, dans laquelle Q représente un radical aliphatique $C_2–C_6$ contenant une double liaison éthylénique, en présence d'un catalyseur de fixation, procédé caractérisé en ce qu'on effectue la réaction dans un réacteur tubulaire, en faisant circuler le mélange réactionnel à une vitesse d'au moins 10 m/mn et en ce que le silane à liaison Si-H est mis en jeu en excès par rapport à la quantité de composé à radical tétrafluoroéthyloxy présent dans le mélange réactionnel.

2. Procédé selon la revendication 1, caractérisé en ce que l'excès de silane représente de 10 à 25 mol % par rapport à la quantité de composé à radical tétrafluoroéthyloxy présent dans le mélange réactionnel.

## Claims

1. Process for the manufacture of tetrafluoroethoxyalkyl silanes in the liquid phase by the addition of a silane containing an Si-H bond to a tetrafluoroethoxy compound of the formula $HCF_2–CF_2–O–Q$, in which Q represents an aliphatic radical having from 2 to 6 carbon atoms and an olefinic double bond, in the presence of an addition catalyst, characterised in that the reaction is carried out in a tube reactor with rotation of the reaction mixture, a rotational speed of at least 10 m/minute being maintained, and that the silane containing the Si-H bond is used in excess, based on the amount of the trafluoroethoxy compound present in the reaction mixture.

2. Process according to claim 1, characterised in that the excess of silane is from 10 to 25 mol %, based on the amount of the tetrafluoroethoxy compound present in the reaction mixture.